# EUROPEAN PATENT SPECIFICATION

(11) **EP 3 947 066 B1**
(45) Date of publication and mention of the grant of the patent: **29.11.2023**
(21) Application number: 20722682.0
(22) Date of filing: 17.03.2020
(51) Int. Cl.: B60T 7/10, B60T 11/04, B60T 11/16, B62L 3/02, B62L 3/08

(54) **A SYNCHRONIZED BRAKING SYSTEM**
SYNCHRONE BREMSANLAGE
DISPOSITIF DE FREINAGE SYNCHRONE

(30) Priority: 25.03.2019 IN 201941011578
(43) Date of publication of application: 09.02.2022
(73) Proprietor: TVS Motor Company Limited, Chennai 600006 (IN)
(72) Inventor: MOHAN, Shanmugam, Chennai 600 006 (IN); RAJU, Karnam Venkata Manga, Chennai 600 006 (IN)
(74) Representative: Patentanwaltskanzlei Matschnig & Forsthuber OG
(86) International application number: PCT/IN2020/050247
(87) International publication number: WO 2020/194336

(56) References cited:
- EP-A1- 3 409 571
- WO-A1-2014/129090
- WO-A1-2018/104833

## Description

### TECHNICAL FIELD

The present subject matter, in general, relates to a braking system, and, in particular relates, to a synchronized braking system of a multi-wheeled saddle vehicle.

### BACKGROUND

In the last decade, user safety has become a principal aspect of the automobiles. Various safety systems are provided in motor vehicle for user safety. Various braking systems have been developed for facilitating braking functionalities in the multi-wheeled motor vehicles like two-wheeled and three-wheeled motor vehicles. In line with this, conventionally braking systems that allow simultaneous actuation of a front brake and a rear brake upon application of a single brake lever have gained widespread popularity across the globe due to improved stopping characteristics of the motor vehicle.

Generally, motor vehicles like two-wheeled and three-wheeled vehicles are provided with a pair of mechanically operated drum brakes. However, with the advent of braking technology, hydraulically operated drum brakes, disc brakes, or a combination of both have come to use. Also, in some applications disc brake is installed on both front and rear wheels to offer effective braking performance.

Conventionally, two-wheeled or three-wheeled vehicles are provided with a braking system for slowing or stopping the vehicle. The braking system, usually, includes at least one brake assembly, for example a front wheel brake assembly and a rear wheel brake assembly for at least one front wheel and at least one rear wheel, respectively. Each of the front wheel brake assembly and the rear wheel brake assembly is connected to a brake lever for actuation. The brake lever can be connected to the brake assembly in a variety of ways. For example, the brake lever can be connected to the brake assembly by means of a brake hose that transmits a hydraulic fluid. In such a case, one end may be secured to the brake assembly comprising a brake caliper and a brake disc, and the other end may be connected to a master cylinder. Consequently, actuation of the brake lever may result in displacement of hydraulic fluid for actuation of the brake assembly.

Generally, the front wheel and the rear wheel are provided with separate braking systems. However, in order to improve braking systems, to reduce stopping distance, that allow simultaneous actuation of a front brake and a rear brake by application of a single brake lever have been developed.

WO 2018/104833 A1 FP 3 409 571 A1 and WO 2014/129090 A1 disclose synchronized breaking systems according to the prior art.

The invention is defined in the appended independent device claim 1 and in the appended independent method claim 12.

### BRIEF DESCRIPTION OF THE DRAWINGS

The detailed description is described with reference to the accompanying figures. In the figures, similar numbers are used throughout the drawings to reference like features and components.
Fig. 1 illustrates a left side view of an exemplary motor vehicle, in accordance with an embodiment of the present subject matter.
Fig. 2 a schematic view of a synchronized braking system, in accordance with the embodiment of the present subject matter.
Fig. 3 a right side view of a portion of the synchronized braking system, in accordance with an embodiment as depicted in Fig. 2.
Fig. 4 illustrates an exploded view of the synchronized braking system, in accordance with an embodiment as depicted in Fig. 2.
Fig. 5 illustrates a rear-left side perspective view of a portion of the synchronized braking system, in accordance with an embodiment.
Fig. 6 depicts an inward left-side view of a portion of the synchronized braking system, in accordance with an embodiment of the present subject matter.
Fig. 7 depicts an inward left-bottom sectional side view of a portion of the synchronized braking system with sections taken along axis A-A', in accordance with an embodiment of the present subject matter.

### DETAILED DESCRIPTION

Conventional two-wheeler or three-wheeler braking systems usually include either hand-operated brake levers for both the front and rear wheels or include a combination of hand-operated and foot-operated brake levers. In the latter case, generally, the front wheel brakes are hand-operated, and include a front wheel brake lever mounted on a handle of the two-wheeled vehicle for actuation, whereas the rear wheel brakes can be foot-operated by a rear wheel brake-pedal provided near a foot-rest of the rider.

Generally, the rear brake lever is popularly used as a combined brake force transmitting member. Upon actuation of the combined braking force transmitting member, the braking force is distributed to the front wheel brake and the rear wheel brake. Conventional combined braking systems employ a large number of components and linkages or hydraulic or both to connect the combined brake lever to both the rear wheel brake assembly and the front wheel brake assembly. Especially, in case of a braking system involving hydraulic systems, the number of intermediate components may increase. For example, in a braking system known in the art, a hydraulic pressure control valve (PCV) or a proportionate valve with delay valve is used in brake systems with a disc brake at both front wheel(s) and rear wheel(s) to distribute braking force therebetween during application of a one brake lever. These pressure control valve and the delay valve can be set up as a separate systems connected in series through hydraulic circuit line or integrated as a single system. Moreover, certain systems use additional brake caliper pots and pistons for actuating front brake, known as a three-pot caliper or divided pots caliper at front. Further, such systems may require additional brake hose with or without additional master cylinder for actuation of front brake. These systems have more number of components, and joints for connecting them which makes them less reliable, less durable, and complex to service due to multiple components and joints, which are weak points.

Moreover, some other type of systems known in the art include common brake hose and brake caliper at front wheel for normal front brake operation and also for combined brake applications. Even in such systems the front brake lever and the front brake caliper are connected through a PCV. Thus, such systems also have a greater number of additional intermediate systems like PCVs, joints for connecting hoses to PCV, whereby they are prone to more problems in terms of assembly process, oil filling quantity, and reliability as more number of joints are weak points. Also, due to the longer hoses that are required to connect the system from pedal region to handle region makes the costlier and also less durable. Also, serviceability of such system is complex which is time consuming.

Generally, the presence of longer hydraulic systems in the combined brake system applications will also cause the problem of unwanted air bubbles that is like a compressible gas, which causes excessive movement at the lever and dramatically reduce braking performance. This offers poor brake or spongy brake feel, which is undesired. Moreover, such hydraulic braking systems requires a frequent or specific fill-bleed process in terms of filling sequence and need for extra brake fluid.

In the aforementioned and other systems, a longer hydraulic circuit used is prone to volumetric expansion in the system. This leads to poor brake lever feel issues like spongy or soft lever feel or excess lever travel and undesirable frequent maintenance / calibration cost. In addition to poor braking feel and deteriorated braking system performance, the rider undergoes fatigue due to excess energy required for brake actuation, especially during condition requiring frequent applications of brakes like dense traffic conditions or during city riding situations or both.

Moreover, hydraulic systems work on application of pressure. Any connection point in the system acts a feeble point at which pressure drop/ leak can occur. For example, due to the presence of multiple intermediate components and connections with the components, there are higher chances of leakage in hydraulic system, circuits and joints. Thus, loss of pressure can cause failure of braking system which is a major safety issue. Further, the intermediate components like the PCV or delay valve or both may have the issue of piston seizure. This is also one of the serious physical conditions as seizure of piston, especially in an actuated condition, blocks the front brake circuit even when the user does not want to apply front brake lever or even when the user wants to immediately release front wheel brake. So, even if the user releases the rear brake lever, acting as combined brake lever, the front wheel brake will still be kept at actuated condition without any release by rider's control. This could result in front wheel locking. The wheel locking issue occurring at the front wheel is more dangerous than rear wheel as it would cause nose dive of the vehicle or lateral fall leading to serious rider injuries. Thus, road safety becomes critical and severe.

Also, accommodation of such hydraulic system like PCV and other hydraulic hoses would take ample space on the vehicle. Besides, the large components like PCV require additional mounting on the frame requiring frame modification thereby affecting layout of the vehicle. Accommodation of components like PCV affects the vehicle width due to swelling of the vehicle width near the PCV.

Thus, there is a need for a braking system that is capable of addressing the aforementioned and other problems in the prior art. Moreover, the system should be simple, having less weight, reliable, and cost effective. Also, the system should cost less in terms of maintenance. The system should also be capable of offering improved brake feel/response and reliability, whereby the user feels confident while riding the vehicle.

For example, the synchronized braking system of the present subject matter provides an independent wheel brake capable of applying braking forces to one of a front wheel(s) or a rear wheel(s) of a two-or three-wheeled vehicle, and a synchronous brake lever capable of applying braking forces to both the rear wheel(s) and the front wheel(s) of the two-or three-wheeled vehicle.

Hence, the present subject matter provides a synchronized braking system (SBS) to overcome the above stated and other problems of the conventional braking systems known in the prior art. For example, the synchronized braking system of the present subject matter enables actuation two or more wheel brake(s), say at least one front wheel brake and at least one rear wheel brake, by application of one brake lever/pedal.

It is an aspect that a synchronous brake lever is pivotable about a fixed-pivot support, and the foot-operated brake lever pivots upon application of force by user. The brake lever acts as an input arm and a pivot shaft of the synchronized braking system has as an output arm, wherein the pivot shaft is rotatable along with the brake pedal and acting as a single rigid member. It is a feature that the number of intermediate parts are less thereby making the system compact. Further, the pivot shaft can be adapted to provide desired torque without affecting the length or other parameters of the brake pedal/lever.

It is an aspect that the synchronized braking system includes a reaction relay member, which is freely rotatable with reference to pivot shaft and about the fixed pivot axis. In one embodiment, the reaction relay member is compactly sandwiched between the pivot shaft-output arm and a support member supporting the pivot shaft and the brake-pedal. Thus, the braking system can be compactly disposed on the vehicle without altering the frame member or other ancillary parts of the vehicle. This also avoids any swelling of the vehicle width in lateral direction.

In one embodiment, an intermediate brake cable member is provided which includes an outer sheath and an inner cable. Further, in one embodiment, a first end of the reaction relay member movably supports the outer sheath of the intermediate brake cable.

Furthermore, in an embodiment, the pivot shaft-output arm is hingedly coupled to the inner cable of the intermediate brake cable member. Thus, the reaction relay member capable of actuating a rear brake actuating member through reaction of an outer sheath of an intermediate brake cable acting on the reaction relay member during application of said synchronous brake actuation pedal. Thus, the compact reaction relay member enables actuation of both the front wheel brake and the rear wheel brake, which can be disc brakes without the need for the PCV.

In one embodiment, the front wheel brake is a disc brake, and the intermediate brake cable is coupled to a front master cylinder for actuating the front wheel brake mounted on the front wheel. In one implementation, the front master cylinder, also referred to as a front brake actuating member, in mounted on the handle bar assembly of the motor vehicle. It is an aspect that only an intermediate cable is routed the braking system to the front master cylinder, which can be compactly routed.

Further, in one embodiment, the rear wheel brake is a disc brake, and the rear braking force transmitting member is coupled to a rear master cylinder for actuating the rear wheel brake mounted on the rear wheel. Thus, it is an aspect that the braking system can be disposed near the brake lever/pedal thereby providing desired torque to rear wheel brake without any losses or with minimal losses.

In an embodiment, the reaction relay member is rotatably supported on a pivot shaft on the frame member. In an embodiment, a second end of the reaction relay member is coupled to a brake rod by means of a hinged joint. The rear wheel brake gets actuated by the reaction relay member without a direct connection with the brake pedal.

Further, in an embodiment, the reaction relay member includes at least one stopper for preventing the rear wheel brake actuating pedal from travelling beyond a predetermined value. In an embodiment, the predetermined value is analogous to a clearance between the stopper and the brake-pedal. Thus, the stopper helps in ensuring braking rear wheel even when the front brake system fails or the synchronized front brake cable is not working. Further, the stopper limits front wheel braking force beyond a certain predetermined value, thereby preventing front wheel skidding during hard braking on rear brake-pedal, especially during cornering and on slippery / wet surfaces. Thus, the stopper helps in improving overall vehicle safety.

Furthermore, in one embodiment, the synchronized braking system is provided with at least one return spring disposed between the reaction relay member and the support member to return the reaction relay member to its initial position. In one embodiment, another return spring may be provided that helps in providing a delay in the front braking thereby avoiding front wheel skidding / locking at corners and slippery /wet surfaces.

Further, the synchronized braking system of the present subject matter ensures that the front wheel brake is actuated even by simple intermediate brake cable without the need for a pressure control valve (PCV) and longer hydraulic brake hoses. For example, any unnecessary failures due to piston seizure or sponge feel is reduced or eliminated.

Furthermore, the synchronized braking system of the present subject matter is compact and is capable of being incorporated in existing set-ups without involving any major change to the overall layout of the vehicle. For example, the reaction relay member, and the pivot shaft are compactly disposed inward of the support member. Thus, when viewed from the lateral outside of the vehicle, the reaction relay member, and the pivot shaft overlap with at least a portion of the support member. Also, the conventionally available support member or the like can be used for mounting of the proposed synchronized braking system.

Furthermore, the synchronized braking system of the present subject matter is simpler, as it involves lesser number of parts and is reliable to achieve optimal control of actuation forces to both front and rear braking force transmitting members with a predetermined ratio irrespective of free-play difference between the front and rear brake systems.

It is another aspect that the synchronized braking system can be implemented in vehicles with at least two wheels having a rear disc brake system. Further, the present subject matter is applicable to vehicles with at least two wheels with a rear hydraulic control for a rear drum brake system.

The present subject matter is applicable to motor vehicle with disc brake systems employed on both front and rear wheels.

Moreover, the present subject matter can be integrated with single channel or dual channel anti-lock braking systems (ABS) with ease.

The present subject matter is not limited to systems having a brake-pedal as it is applicable to vehicles system with a hand operated rear brake system.

These and other advantages of the present subject matter would be described in greater detail in conjunction with an embodiment of a two wheeled motorcycle with single disc front & rear disc brakes with the figures in the following description.

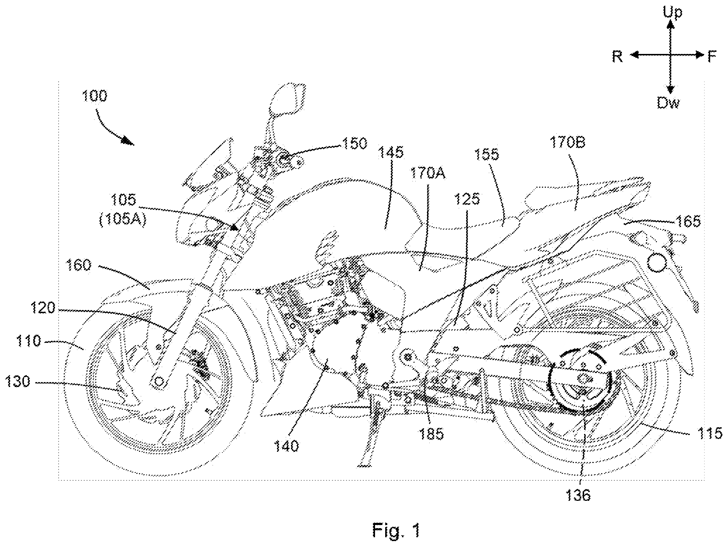

Fig. 1 depicts a left side view of an exemplary motor vehicle 100, in accordance with an embodiment of the present subject matter. The motor vehicle 100 includes a frame member 105 supporting a front wheel 110 and a rear wheel 115. The front wheel 110 and the rear wheel 115 are rotatably supported by front suspension system 120 and the rear suspension system 125, respectively. In one embodiment, the rear wheel 115 is additionally supported by a swingarm (not shown). The front wheel 110 is provided with a front wheel brake 130 and the rear wheel 115 is provided with a rear wheel brake 136 (shown as dotted line). In the present embodiment, the front wheel brake 130 is a disc brake. However, the front wheel brake 130 can be a drum brake or the disc brake, which is actuated using a hydraulic actuation.

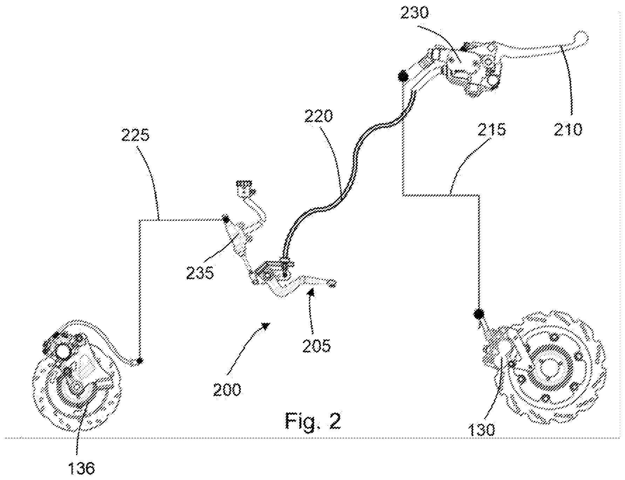

In the present embodiment, a power unit 140 is mounted to a front portion of the frame member 105 and is disposed substantially below a fuel tank 145 and rearward of the front wheel 110. The power unit 140 is coupled to a transmission system (not shown) for transferring power to the rear wheel 115. Further, a carburetor or a fuel injection system or the like (not shown) supplies air-fuel mixture to the power unit 140 including an internal combustion engine. Further, the front wheel 110 is pivotally supported by the frame member 105 and a handle bar assembly 150 is functionally connected to the front wheel 110 for maneuvering the vehicle 100. The handle bar assembly 150 supports an instrument cluster, vehicle controls including throttle, clutch, or electrical switches. Further, the handle bar assembly 150 supports at least one independent brake actuation lever 210 (shown in Fig. 2). The vehicle 100 includes another lever that is a brake-pedal 205 (shown in Fig. 2) disposed adjacent to a rider foot support structure 185 (on right hand side). The term 'brake-pedal' is not limiting, wherein it includes a foot-operated pedal or a hand-operated lever. Also, in one alternate embodiment, the brake-pedal is mounted to the handle bar assembly 150 supported by the frame member 105, wherein for the sake herein the handle bar assembly 150 is considered to be part of the frame member 105.

Further, a seat assembly 155 is mounted to the frame member 105 and disposed rearward of the fuel tank 145. The rider can operate the vehicle 100 in a seated position on the seat assembly 155. Moreover, the vehicle 100 includes a pair of rider foot support structure 185 disposed on either side of the vehicle 100 for the user to rest feet. The foot support structure 185 extends in a lateral direction RH-LH of the vehicle 100 and is secured to the frame member 105 of the vehicle 100.

Further, the vehicle 100 includes a front fender 160 covering at least a portion of the front wheel 110 and a rear fender 165 covering at least a portion of the rear wheel 115. Also, the vehicle 100 is provided with plurality of panels 170A, 170B mounted to the frame member 105 and covering the frame member 105 and/or parts of the vehicle 100. Also, the vehicle 100 is employed with plurality of mechanical, electronic, and electromechanical system including an anti-lock braking system, a vehicle safety system, or an electronic control system. The vehicle 100 is employed with a synchronized braking system 200 (shown in Fig. 2) and a brake-pedal 205 is capable of actuating the synchronized braking system 200.

Fig. 2 illustrates a schematic representation of the synchronized braking system, in accordance with an embodiment of the present subject matter. The synchronized braking system 200 includes an independent brake actuation lever 210 capable of actuating the front wheel brake 130. The independent brake actuation lever 210, in the present implementation, is an independent hand actuated lever 210 that is capable of actuating the front wheel brake 130 through a front brake actuating member 230. The independent brake actuation lever 210 is connected to the front wheel brake 130 through a front wheel brake cable/hose 215. The front brake actuating member 230 as per an embodiment is a master cylinder 230 and it includes a piston capable of displacing brake fluid upon application of the independent brake actuation lever 210 thereby actuating the front wheel brake 130.

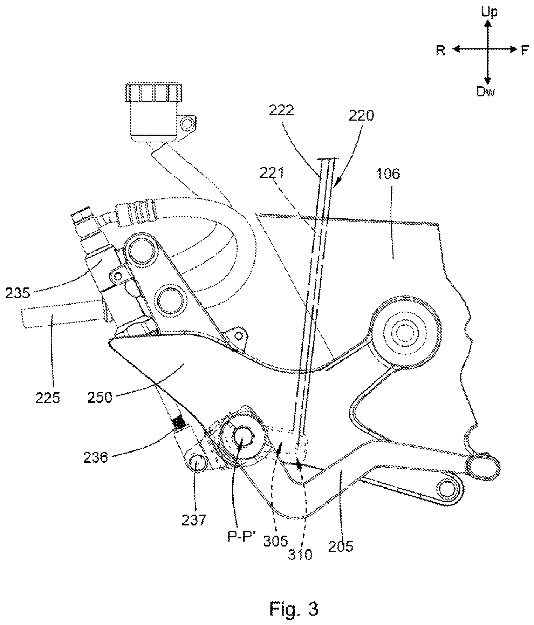

Further, the synchronized braking system 200 includes the brake-pedal 205, which acts as a synchronous brake actuation lever 205. Thus, the terms `brake-pedal', 'synchronous brake actuation pedal' and `synchronous brake actuation lever' are interchangeably used. Application of the brake-pedal 205 actuates the rear wheel brake 136 through a rear brake actuating member 235, which is another master cylinder 235 for rear brake actuation. Further, brake-pedal 205 also enables actuation of the front wheel brake 130 through an intermediate brake cable 220, which is functionally connected to the brake-pedal. Fig. 3 depicts a right-side detailed view of a portion of the synchronized braking system 200, whereby the means of functioning of the synchronized braking system 200 is explained.

As shown in Fig. 3, in accordance with an embodiment, the brake-pedal 205 is pivotally supported by a support member 250 secured to a frame member 105 of the vehicle 100 (as shown in Fig. 1). The frame member 105 includes a main tube (not shown) that extends rearward from a head tube 105A and subsequently the main tube extends downward towards a rear side of the power unit 140. A pivot bracket 106 is secured to the main tube and the pivot bracket 106 is capable of supporting one or more components of the vehicle 100 including a swing arm and the support member 250.

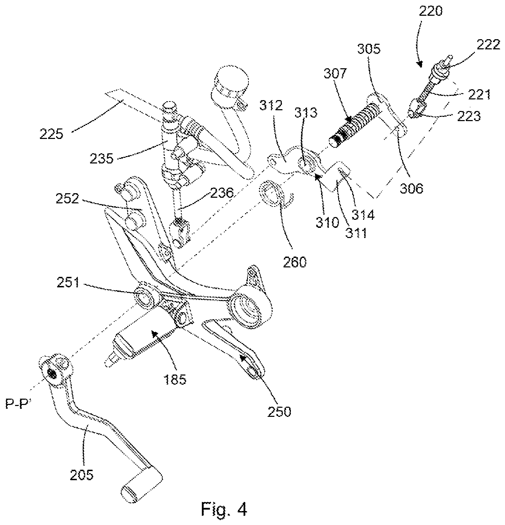

The synchronized braking system 200 includes a pivot shaft 307 (shown in Fig 4), a pivot shaft-output arm 305, a reaction relay member 310. In one embodiment, the brake-pedal 205, the pivot shaft-output arm 305 (also referred to as output arm 305), and the reaction relay member 310 are pivoted about a fixed pivot axis P-P' and on the pivot shaft 307. Thus, the system is compactly disposed on the vehicle 100 with single fixed pivot P-P' point/axis. Thus, the synchronized braking system of the present subject matter occupies less space on the vehicle 100 with minimal interference with other components of the vehicle 100.

The synchronized braking system 200 includes the intermediate brake cable which is operatively connected to the brake-pedal 205 by means of an inner cable 221 through a hinge joint. In the depicted embodiment, the inner cable 221 of the intermediate brake cable 220 is connected to the output arm 305 on the pivot shaft 307, which is fixedly connected to the brake-pedal 205. The term 'fixedly connected' implies that the brake-pedal 205 and the pivot shaft 307 pivot connected rigidly together. For example, the inner cable 221 is used for operation of one of the wheel brakes, which is the front wheel brake in the present embodiment. In one embodiment, an outer sheath 222 of the intermediate brake cable 220 is abutting or is connected to the reaction relay member 310, which is freely pivotable about the pivot axis P-P'.

Further, the reaction relay member 310 is also connected to a brake rod/piston rod 236. In the depicted embodiment, the reaction relay member 310 is connected to the piston rod 236 of a rear brake actuating member 235, which is a master cylinder. The piston rod 236 is hingedly connected to the reaction relay member 310, wherein the pivotal or angular movement of the reaction relay member 310 causes the linear movement of the piston rod 236 capable of causing brake actuation. The rear brake actuating member 235 is connected to the rear wheel brake 136 (shown in Fig. 2) through a rear braking force transmitting member 225, which is a rear brake hose 225 in the present embodiment. The reaction relay member 310 is communicated or communicatingly connected to the rear brake actuating member 235. The term communicated used herein includes a direct connection or indirect connection (connection through an intermediate member).

Thus, when the user applies the brake, which is analogous to actuation of the brake-pedal 205, the brake-pedal 205 rotates about the fixed pivot axis P-P', and also causes the pulling of the inner cable 221 of the intermediate brake cable 220. The outer sheath 222 of the intermediate brake cable 220 causes reaction on the reaction relay member 310, which causes actuation of the piston rod 236. Moreover, the intermediate brake cable 220 is routed upwards from the pivot shaft 307 and subsequently with a smooth curve it is routed towards the front brake actuating member 230 resulting in minimum losses of the brake actuating forces due to smooth bend. Thus, the present subject matter offers better brake feel/response due to reduced losses even when implemented in a motor vehicle with foot operated type brake-pedal 205.

Fig. 4 illustrates an exploded view of the synchronized braking system 200, in accordance with an embodiment of the present subject matter. In an embodiment, reaction relay member 310, relays the reaction of the intermediate brake cable 220 from the outer sheath 222 of the intermediate brake cable 220 to the piston rod 236 therethrough. The outer sheath 222 of the intermediate brake cable 220 is supported by a first end 311 of the reaction relay member 310, which is pivoted on a pivot shaft 307.

In one embodiment, the support member 250 pivotally supports the pivot shaft 307, which has a fixed pivot point/ axis P-P' formed by the pivot shaft 307. The brake-pedal 205 is fixed to the pivot shaft 307. Thus, fixed connection of the brake-pedal 205 to the pivot shaft 307 enables in pivotal movement or rotation of the pivot shaft 307 along with the brake-pedal 205 thereby causing pulling of the inner cable 221 that is connected to the pivot shaft-output arm 305. This causes outer sheath 222 of intermediate brake cable 220 to cause reaction on the reaction relay member 310. The pivot shaft-output arm 305 includes a lever portion 306, wherein as per an embodiment, the lever portion 306 is a flat structure extending in a longitudinal direction of the vehicle 100. The pivot shaft 307 is having a cylindrical profile and is extending in vehicle width direction with lever portion 306 disposed at one end, in the present embodiment. Thus, the pivot shaft 307, in an assembled condition, extends into a first aperture 313 formed on the reaction relay member 310 and through a second aperture 251 formed on the support member 250 thereby supporting the reaction relay member 310 thereon. Thus, the pivot shaft 307, moving along with the brake-pedal 205, compactly supports the reaction relay member 310 and at the same time enables reaction for application of brake force(s). In other words, in an assembled condition, the reaction relay member 310 is operably sandwiched between the support member 250 and the pivot shaft-output arm 305. Moreover, the brake-pedal 205, the reaction relay member 310, and the pivot shaft-output arm 305 are disposed about common pivot axis P-P'

Further, in one embodiment, the inner cable 221 of the intermediate brake cable 220 has one connecting end 223 that is hingedly connected to the lever portion 306. The inner cable 221, in an assembled condition, passes through a slit portion 314 provided on the first end 311 of the reaction relay member 310. Thus, the inner cable is movable freely about the slit portion 314 having at least a portion with circular cross-section. Further, the outer sheath 222 is abutting on the first end 311 of the reaction relay member 310 in an assembled condition. Furthermore, at least one return elastic member e.g. torsional spring 260 is disposed between the reaction relay member 310 and the support member 250 to provide return force. The brake-pedal 205 returns to its initial position through the return force provided by the rear brake actuating member. Other end of the intermediate brake cable 220 gets operationally connected to the front brake actuating member 230 for actuating the front wheel brake 130.

In one embodiment, the rear brake actuating member 235 is secured to a securing portion 252 of the support member 250. The piston rod 236 extends towards a second end 312 of the reaction relay member 310 and is hingedly connected thereto. In one embodiment, the first end 311 extends in a forward direction from the first aperture 313 and the second end 312 extends in a rearward direction from the first aperture 313. Also, according to the depicted embodiment, the hinge axis of the piston rod 236 and the hinge axis of the inner cable 221 are substantially parallel & / or substantially vertical w.r.t a horizontal plane.

In one embodiment, the reaction relay member 310 is provided with a stopper member (not shown) at a bottom portion, wherein the stopper prevents a relative movement between the pivot shaft 307 and the reaction relay member 310 after a certain degree of rotation, whereby any additional braking force exerted by the user thereafter; the force will be transferred to the rear wheel brake 136 only through the reaction relay member 310 thereby restricting excess braking force from being transferred to front wheel brake 130.

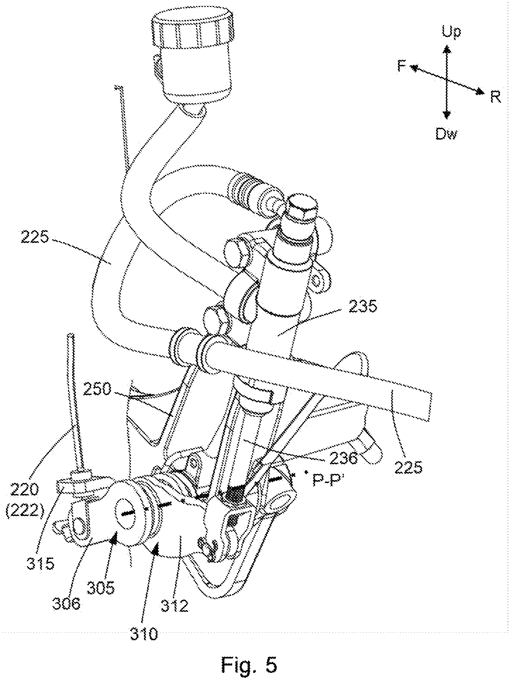

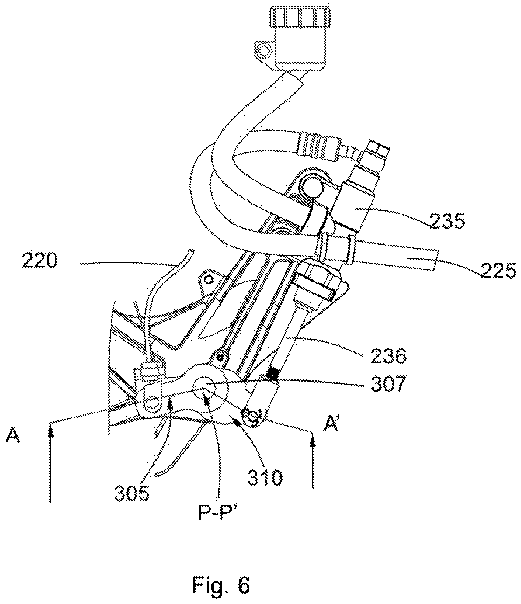

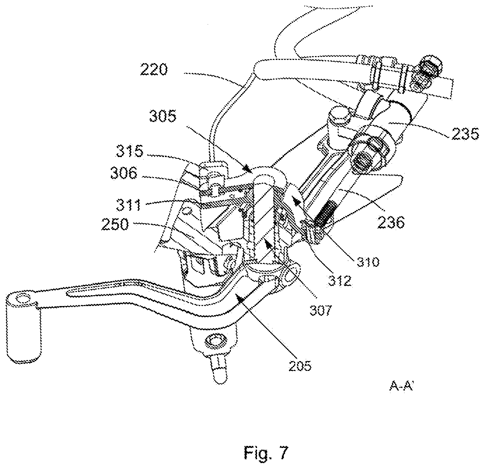

Fig. 5 illustrates a rear-left side perspective view of a portion of the synchronized braking system, in accordance with an embodiment. Fig. 6 depicts an inward side view of a portion of the synchronized braking system 200 and Fig. 7 depicts a bottom-inner side sectional view with sections taken along axis A-A', in accordance with an embodiment of the present subject matter. The pivot shaft-output arm 305, and the reaction relay member 310 are compactly and securely disposed on inward side of the support member 250. The reaction relay member 310 at the first end 311 (as shown in Fig. 4) is having an extended portion 315 which is substantially orthogonally disposed to rest of the reaction relay member 310. To the extended portion 315 the outer sheath 222 either gets abutted or secured. Moreover, in one embodiment, when viewed from top, the extended portion 315 overlaps with at least a portion of the pivot shaft-output arm 305.

However, in another alternative embodiment, instead of the pivot shaft 307, the inner cable 221 of the intermediate brake cable 220 is operatively connected to the brake-pedal 205, instead of the pivot shaft-output arm 305.

In a second embodiment, the reaction relay member 310 may be connected to a piston rod (not shown) extending in a rearward direction.

In an embodiment, the synchronized braking system 200 of the present subject matter includes the reaction relay member 310 pivotally mounted on the pivot shaft 307 (as shown in Fig. 6). The reaction relay member 310 is capable of rotating about the pivot shaft 307 of the pivot shaft-output arm 305, independent of the brake-pedal 205.

Thus, when the user applies force or actuates the brake-pedal 205, the brake-pedal 205 gets rotated in clockwise direction (when viewed from right side of the vehicle as shown in Fig. 3). The clockwise rotation of the brake-pedal 205 also causes the pivot shaft-output arm 305 to rotate in clockwise direction to pull or actuate the inner cable 221 in downward direction thereby initially causing outer sheath 222 cable reaction on the reaction relay member 310 thereby causing rotation of the reaction relay member 310 in clockwise direction causing application of rear wheel brake 136 through the rear brake actuating member 235. Further, after a certain degree of rotation of the reaction relay member 310, the further rotation of the reaction relay member 310 is limited which causes the sliding of the inner cable 221 of the intermediate brake cable 220 due to further clockwise rotation of the pivot shaft-output arm 305. The sliding of the inner cable 221 causes actuation of the front brake actuating member 230 whereby the front wheel brake 130 is applied. Thus, the application of both the rear wheel brake 136 and the front wheel brake 130 is achieved in a desirable command sequence with intended delay as well as intended distribution of forces. In one implementation, the system 200 offers a delay in application of the front wheel brake 130.

Furthermore, the synchronized braking system of the present subject matter offers a predetermined ratio for front wheel brake(s) and rear wheel brake(s) irrespective of free-play difference between the front and rear brake systems. For example, even if the independent brake lever is having a different free-play compared to the synchronous brake lever, when the synchronous brake lever/pedal is actuated the displacement of the synchronous brake lever is transferred to both front and rear wheel brakes by balancing their traction forces with a predetermined ratio. As the force-balancing happens between the independent brake cable (traction force) and its reaction on the reaction relay member.

### List of reference signs:

| | | | |
|---|---|---|---|
| 100 | motor vehicle | 230 | front brake actuating member |
| 105 | frame member | 235 | rear brake actuating member |
| 106 | pivot bracket | 236 | piston rod |
| 110 | front wheel | 250 | support member |
| 115 | rear wheel | 251 | second aperture |
| 116 | intermediate brake cable | 252 | securing portion |
| 130 | front wheel brake | 260 | return spring |
| 136 | rear wheel brake | 305 | pivot shaft-output arm/output-arm |
| 150 | handle bar assembly | | |
| 200 | synchronized braking system | 306 | lever portion (of pivot shaft-output arm) |
| 205 | rear brake actuation pedal/ synchronous brake actuation pedal | 307 | pivot shaft |
| 210 | brake actuation lever | 310 | reaction relay member |
| | | 311 | first end |
| 215 | front brake cable | | |
| 220 | intermediate brake cable | 312 | second end |
| 221 | inner cable | 313 | first aperture |
| 222 | outer sheath | 314 | slit portion |
| 223 | connecting end | 315 | extended portion |
| 225 | rear braking force transmitting member | P-P' | pivot axis |

## Claims

1. A synchronized braking system (200) for a motor vehicle (100), said synchronized braking system (200) comprising:
a front wheel brake (130),
said front wheel brake (130) being capable of applying braking forces to a corresponding front wheel (110) of said motor vehicle (100);
a rear wheel brake (136),
said rear wheel brake (136) being capable of applying braking forces to a corresponding rear wheel (115) of said motor vehicle (100); and
an independent brake actuation lever (210),
said independent brake actuation lever (210) being coupled to said front wheel brake (130) through a front wheel brake cable (215);
a synchronous brake actuation pedal (205), which is pivotably supported to a frame member (105) of said vehicle (100) by a pivot shaft (307), wherein said synchronous brake actuation pedal (205) is capable of receiving brake actuating forces;
**characterized by**
a reaction relay member (310), which is pivotable about said pivot shaft (307), wherein an output arm (305) of said pivot shaft (307) is coupled to an intermediate brake cable (220),
wherein said intermediate brake cable (220) is connected to a front brake actuating member (230) of said front wheel brake (130),
wherein said reaction relay member (310) is capable of rotating independently of said synchronous brake actuation pedal (205),
and is operatively connected to a rear brake actuating member (235), and is configured to actuate said rear brake actuating member (235) through reaction of an outer sheath (222) of said intermediate brake cable (220) acting on said reaction relay member (310) during application of said synchronous brake actuation pedal (205).

2. The synchronized braking system (200) as claimed in claim 1, wherein
said front wheel brake (130) is a disc brake and said intermediate brake cable (220) includes one of a brake cable and said front wheel brake cable (215), which is a brake hose, and
said rear wheel brake (136) is a disc brake and,
wherein a rear braking force transmitting member (225) includes one of a brake rod and a brake hose operationally connected to said rear wheel brake (136).

3. The synchronized braking system (200) as claimed in claim 1, wherein said intermediate brake cable (220) is formed by a brake cable, which includes:
an outer sheath (222) and an inner cable (221), wherein
said inner cable (221) is connected to a lever portion (306) of said output arm (305), and
said pivot shaft (307) is fixedly connected to said synchronous brake actuation pedal (205), and
said outer sheath (222) is connected to said reaction relay member (310).

4. The synchronized braking system (200) as claimed in claim 3, wherein said reaction relay member (310) includes:
a first end (311) connected to said outer sheath (222), and
a second end (312) connected to a piston rod (236) of said rear brake actuating member (235), and
wherein a rear brake actuating member (235) is a rear master cylinder.

5. The synchronized braking system (200) as claimed in claim 3, wherein
said output arm (305) has a lever portion (306) to which said inner cable (221) is hingedly coupled, and
said output arm (305) includes a pivot shaft (307) for pivotably mounting said reaction relay member (310) to a support member (250),
said support member (250)being secured to a frame member (105).

6. The synchronized braking system (200) as claimed in claim 1, wherein
said synchronized braking system (200) is provided with a return spring (260), wherein
said return spring (260) is disposed between said reaction relay member (310) and said support member (250), and
said return spring (260) is operatively connected between said reaction relay member (310) and said support member (250).

7. The synchronized braking system (200) as claimed in claim 1, wherein
said rear brake actuating member (235) is secured to a support member (250),
said support member (250) being secured to said frame member (105) and said output arm (305), wherein
said reaction relay member (310), and said synchronous brake actuation pedal (205) are supported by said support member (250) through said pivot shaft (307).

8. The synchronized braking system (200) as claimed in claim 1, wherein
said reaction relay member (310) is directly connected to said rear brake actuating member (235) by a brake control cable, or a link, or a rod, or combination thereof.

9. The synchronized braking system (200) as claimed in claim 1, wherein
said output arm (305) and said reaction relay member (310) are disposed towards an inner side of a support member (250), and
said output arm (305) and said reaction relay member (310) are overlapping with a substantial portion of said extended portion (315), when viewed from a vehicle top side.

10. The synchronized braking system (200) as claimed in claim 1, wherein
said reaction relay member (310) is provided with a stopper member at a bottom portion of said reaction relay member (310), wherein
said stopper member restricts a relative movement between said pivot shaft (307) and said reaction relay member (310) after a certain degree of rotation of said pivot shaft (307).

11. The synchronized braking system as claimed in claim 1, wherein
said pivot shaft (307), in an assembled condition, extends into a first aperture (313) formed on said reaction relay member (310) and extend into a second aperture (251) formed on a support member (250), thereby said pivot shaft (307) supports said reaction relay member (310) thereon.

12. A method of operating a synchronized braking system (200), said method comprising the steps of:
actuating a rear brake actuating member (235) by pivoting a reaction relay member (310) about a pivot shaft (307);
coupling an output arm (305) of said pivot shaft (307) to an intermediate brake cable (220),
said intermediate brake cable (220) being connected to a front brake actuating member (230);
enabling rotation of said reaction relay member (310) independently of a synchronous brake actuation pedal (205); and
communicating to a rear brake actuating member (235), for actuating said rear brake actuating member (235), through reaction of an outer sheath (222) of said intermediate brake cable (220) acting on said reaction relay member (310) during application of said synchronous brake actuation pedal (205).

## Patentansprüche

1. Synchronisiertes Bremssystem (200) für ein Kraftfahrzeug (100), wobei das synchronisierte Bremssystem (200) Folgendes umfasst:
eine Vorderradbremse (130),
wobei die Vorderradbremse (130) in der Lage ist, Bremskräfte auf ein entsprechendes Vorderrad (110) des Kraftfahrzeugs (100) auszuüben;
eine Hinterradbremse (136),
wobei die Hinterradbremse (136) in der Lage ist, Bremskräfte auf ein entsprechendes Hinterrad (115) des Kraftfahrzeugs (100) auszuüben; und
einen unabhängigen Bremsbetätigungshebel (210),
wobei der unabhängige Bremsbetätigungshebel (210) mit der Vorderradbremse (130) über ein Vorderradbremskabel (215) gekoppelt ist;
ein synchrones Bremsbetätigungspedal (205), das schwenkbar an einem Rahmenelement (105) des Fahrzeugs (100) durch eine Schwenkwelle (307) gelagert ist, wobei das synchrone Bremsbetätigungspedal (205) in der Lage ist, Bremsbetätigungskräfte aufzunehmen;
**gekennzeichnet durch**
ein Reaktionsrelaiselement (310), das um die Schwenkwelle (307) schwenkbar ist, wobei ein Ausgangsarm (305) der Schwenkwelle (307) mit einem Zwischenbremskabel (220) gekoppelt ist,
wobei das Zwischenbremskabel (220) mit einem vorderen Bremsbetätigungselement (230) der Vorderradbremse (130) verbunden ist,
wobei das Reaktionsrelaiselement (310) in der Lage ist, sich unabhängig von dem Synchronbremsbetätigungspedal (205) zu drehen,
und betriebsmäßig mit einem hinteren Bremsbetätigungselement (235) verbunden ist und so konfiguriert ist, dass es das hintere Bremsbetätigungselement (235) durch die Reaktion einer äußeren Hülle (222) des Zwischenbremskabels (220) betätigt, die auf das Reaktionsrelaiselement (310) während der Betätigung des Synchronbremsbetätigungspedals (205) wirkt.

2. Synchronisiertes Bremssystem (200) nach Anspruch 1, wobei
die Vorderradbremse (130) eine Scheibenbremse ist und das Zwischenbremskabel (220) entweder ein Bremskabel oder das Vorderradbremskabel (215) enthält, das ein Bremsschlauch ist, und
die Hinterradbremse (136) eine Scheibenbremse ist und,
wobei ein hinteres Bremskraftübertragungselement (225) entweder eine Bremsstange oder einen Bremsschlauch umfasst, der betriebsmäßig mit der Hinterradbremse (136) verbunden ist.

3. Synchronisiertes Bremssystem (200) nach Anspruch 1, wobei das Zwischenbremskabel (220) durch ein Bremskabel gebildet wird, das Folgendes umfasst:
einen Außenmantel (222) und einen Innenzug (221), wobei
das innere Kabel (221) mit einem Hebelabschnitt (306) des Ausgangsarms (305) verbunden ist, und
die Schwenkwelle (307) fest mit dem Synchronbremsbetätigungspedal (205) verbunden ist, und
die äußere Umhüllung (222) mit dem Reaktionsrelaiselement (310) verbunden ist.

4. Synchronisiertes Bremssystem (200) nach Anspruch 3, wobei das Reaktionsrelaiselement (310) Folgendes umfasst:
ein erstes Ende (311), das mit dem Außenmantel (222) verbunden ist, und
ein zweites Ende (312), das mit einer Kolbenstange (236) des hinteren Bremsbetätigungselements (235) verbunden ist, und
wobei ein hinteres Bremsbetätigungselement (235) ein hinterer Hauptzylinder ist.

5. Synchronisiertes Bremssystem (200) nach Anspruch 3, wobei
der Ausgangsarm (305) einen Hebelabschnitt (306) aufweist, an den das innere Kabel (221) gelenkig gekoppelt ist, und
der Ausgangsarm (305) eine Schwenkwelle (307) zur schwenkbaren Befestigung des Reaktionsrelaiselements (310) an einem Trägerelement (250) aufweist,
wobei das Trägerelement (250) an einem Rahmenelement (105) befestigt ist.

6. Synchronisiertes Bremssystem (200) nach Anspruch 1, wobei
das synchronisierte Bremssystem (200) mit einer Rückstellfeder (260) versehen ist, wobei
die Rückstellfeder (260) zwischen dem Reaktionsrelaiselement (310) und dem Stützelement (250) angeordnet ist, und
die Rückholfeder (260) betriebsmäßig zwischen dem Reaktionsrelaiselement (310) und dem Stützelement (250) verbunden ist.

7. Synchronisiertes Bremssystem (200) nach Anspruch 1, wobei
das hintere Bremsbetätigungselement (235) an einem Stützelement (250) befestigt ist,
wobei das Trägerelement (250) an dem Rahmenelement (105) und dem Ausgangsarm (305) befestigt ist, wobei
das Reaktionsrelaiselement (310) und das Synchronbremsbetätigungspedal (205) durch das Stützelement (250) über die Schwenkwelle (307) gestützt werden.

8. Synchronisiertes Bremssystem (200) nach Anspruch 1, wobei
das Reaktionsrelaiselement (310) direkt mit dem hinteren Bremsbetätigungselement (235) durch ein Bremssteuerkabel oder eine Verbindung oder eine Stange oder eine Kombination davon verbunden ist.

9. Synchronisiertes Bremssystem (200) nach Anspruch 1, wobei
der Ausgangsarm (305) und das Reaktionsrelaiselement (310) zu einer Innenseite eines Trägerelements (250) hin angeordnet sind, und
der Ausgangsarm (305) und das Reaktionsrelaiselement (310) mit einem wesentlichen Abschnitt des verlängerten Abschnitts (315) überlappen, wenn von einer Fahrzeugoberseite aus betrachtet.

10. Synchronisiertes Bremssystem (200) nach Anspruch 1, wobei
das Reaktionsrelaiselement (310) mit einem Anschlagelement an einem unteren Abschnitt des Reaktionsrelaiselements (310) versehen ist, wobei
das Anschlagelement eine Relativbewegung zwischen der Schwenkwelle (307) und dem Reaktionsrelaiselement (310) nach einem bestimmten Grad der Drehung der Schwenkwelle (307) einschränkt.

11. Synchronisiertes Bremssystem nach Anspruch 1, wobei
die Schwenkwelle (307) sich in einem zusammengebauten Zustand in eine erste Öffnung (313) erstreckt, die an dem Reaktionsrelaiselement (310) ausgebildet ist, und sich in eine zweite Öffnung (251) erstreckt, die an einem Stützelement (250) ausgebildet ist, wodurch die Schwenkwelle (307) das Reaktionsrelaiselement (310) darauf stützt.

12. Verfahren zum Betreiben eines synchronisierten Bremssystems (200), wobei das Verfahren die folgenden Schritte umfasst:
Betätigung eines hinteren Bremsbetätigungselements (235) durch Schwenken eines Reaktionsrelaiselements (310) um eine Schwenkwelle (307);
Koppeln eines Ausgangsarms (305) der Schwenkwelle (307) mit einem Zwischenbremskabel (220),
wobei das Zwischenbremskabel (220) mit einem vorderen Bremsbetätigungselement (230) verbunden ist;
Ermöglichen einer Drehung des Reaktionsrelaiselements (310) unabhängig von einem synchronen Bremsbetätigungspedal (205); und
Verbindung zu einem hinteren Bremsbetätigungselement (235), um das hintere Bremsbetätigungselement (235) durch Reaktion einer äußeren Hülle (222) des Zwischenbremskabels (220) zu betätigen, die auf das Reaktionsrelaiselement (310) während der Betätigung des Synchronbremsbetätigungspedals (205) wirkt.

## Revendications

1. Système de freinage synchronisé (200) pour un véhicule à moteur (100), ledit système de freinage synchronisé (200) comprenant :
un frein de roue avant (130),
un frein de roue avant (130), ledit frein de roue avant (130) étant capable d'appliquer des forces de freinage à une roue avant correspondante (110) dudit véhicule à moteur (100) ;
un frein de roue arrière (136),
un frein de roue arrière (136), ledit frein de roue arrière (136) étant capable d'appliquer des forces de freinage à une roue arrière correspondante (115) dudit véhicule à moteur (100) ; et
un levier d'actionnement du frein indépendant (210),
ledit levier d'actionnement de frein indépendant (210) étant couplé audit frein de roue avant (130) par l'intermédiaire d'un câble de frein de roue avant (215) ;
une pédale d'actionnement de frein synchrone (205), qui est supportée de manière pivotante à un élément de cadre (105) dudit véhicule (100) par un arbre de pivot (307), dans lequel ladite pédale d'actionnement de frein synchrone (205) est capable de recevoir des forces d'actionnement de frein ;
**caractérisé par**
un élément de relais de réaction (310), qui peut pivoter autour de l'arbre pivot (307), dans lequel un bras de sortie (305) de l'arbre pivot (307) est couplé à un câble de frein intermédiaire (220),
dans lequel ledit câble de frein intermédiaire (220) est relié à un organe d'actionnement du frein avant (230) dudit frein de roue avant (130),
dans lequel ledit élément de relais de réaction (310) est capable de tourner indépendamment de ladite pédale d'actionnement de frein synchrone (205),
et est relié de manière opérationnelle à un organe d'actionnement du frein arrière (235), et est configuré pour actionner ledit organe d'actionnement du frein arrière (235) par réaction d'une gaine extérieure (222) dudit câble de frein intermédiaire (220) agissant sur ledit organe de relais de réaction (310) lors de l'application de ladite pédale d'actionnement du frein synchrone (205).

2. Système de freinage synchronisé (200) selon la revendication 1, dans lequel
ledit frein de roue avant (130) est un frein à disque et ledit câble de frein intermédiaire (220) comprend un câble de frein et ledit câble de frein de roue avant (215), qui est un tuyau de frein, et
ledit frein de roue arrière (136) est un frein à disque et,
dans lequel un élément de transmission de la force de freinage arrière (225) comprend l'une des tiges de frein et un tuyau de frein reliés de manière opérationnelle audit frein de roue arrière (136).

3. Système de freinage synchronisé (200) selon la revendication 1, dans lequel ledit câble de frein intermédiaire (220) est formé par un câble de frein, qui comprend :
une gaine extérieure (222) et un câble intérieur (221), dans lequel
ledit câble intérieur (221) est relié à une partie levier (306) dudit bras de sortie (305), et
ledit arbre pivot (307) est relié de manière fixe à ladite pédale d'actionnement du frein synchrone (205), et
ladite gaine extérieure (222) est reliée audit élément de relais de réaction (310).

4. Système de freinage synchronisé (200) selon la revendication 3, dans lequel ledit élément de relais de réaction (310) comprend :
une première extrémité (311) reliée à ladite gaine extérieure (222), et
une deuxième extrémité (312) reliée à une tige de piston (236) de l'organe d'actionnement du frein arrière (235), et
dans lequel l'organe d'actionnement du frein arrière (235) est un maître-cylindre arrière.

5. Système de freinage synchronisé (200) selon la revendication 3, dans lequel
ledit bras de sortie (305) comporte une partie levier (306) à laquelle ledit câble intérieur (221) est accouplé de manière articulée, et
ledit bras de sortie (305) comprend un arbre de pivot (307) pour monter de manière pivotante ledit élément de relais de réaction (310) à un élément de support (250),
ledit élément de support (250) étant fixé à un élément de cadre (105).

6. Système de freinage synchronisé (200) selon la revendication 1, dans lequel
ledit système de freinage synchronisé (200) est pourvu d'un ressort de rappel (260), dans lequel
ledit ressort de rappel (260) est disposé entre ledit élément de relais de réaction (310) et ledit élément de support (250), et
ledit ressort de rappel (260) est relié de manière opérationnelle entre ledit élément de relais de réaction (310) et ledit élément de support (250).

7. Système de freinage synchronisé (200) selon la revendication 1, dans lequel
ledit organe d'actionnement du frein arrière (235) est fixé à un organe de support (250),
Cet élément de support (250) est fixé à l'élément de cadre (105) et au bras de sortie (305), dans lequel
ledit élément de relais de réaction (310) et ladite pédale d'actionnement de frein synchrone (205) sont soutenus par ledit élément de support (250) par l'intermédiaire de l'arbre pivot (307).

8. Système de freinage synchronisé (200) selon la revendication 1, dans lequel
ledit élément de relais de réaction (310) est directement relié à l'élément d'actionnement du frein arrière (235) par un câble de commande de frein, ou un lien, ou une tige, ou une combinaison de ceux-ci.

9. Système de freinage synchronisé (200) selon la revendication 1, dans lequel
ledit bras de sortie (305) et ledit élément de relais de réaction (310) sont disposés vers un côté intérieur d'un élément de support (250), et
ledit bras de sortie (305) et ledit membre de relais de réaction (310) se chevauchent avec une partie substantielle de ladite partie étendue (315), lorsqu'ils sont vus du côté supérieur du véhicule.

10. Système de freinage synchronisé (200) selon la revendication 1, dans lequel
ledit élément de relais de réaction (310) est pourvu d'un élément d'arrêt dans une partie inférieure dudit élément de relais de réaction (310), dans lequel
ledit élément d'arrêt limite un mouvement relatif entre ledit arbre pivotant (307) et ledit élément de relais de réaction (310) après un certain degré de rotation dudit arbre pivotant (307).

11. Système de freinage synchronisé selon la revendication 1, dans lequel
ledit arbre pivot (307), à l'état assemblé, s'étend dans une première ouverture (313) formée sur ledit élément de relais de réaction (310) et s'étend dans une seconde ouverture (251) formée sur un élément de support (250), de sorte que ledit arbre pivot (307) supporte ledit élément de relais de réaction (310) sur celui-ci.

12. Méthode de fonctionnement d'un système de freinage synchronisé (200), comprenant les étapes suivantes
actionner un organe d'actionnement du frein arrière (235) en faisant pivoter un organe de relais de réaction (310) autour d'un arbre pivot (307) ;
coupler un bras de sortie (305) de cet arbre pivot (307) à un câble de frein intermédiaire (220),
ledit câble de frein intermédiaire (220) étant relié à un organe d'actionnement du frein avant (230) ;
permettre la rotation de cet élément de relais de réaction (310) indépendamment d'une pédale d'actionnement de frein synchrone (205) ; et
communiquer avec un organe d'actionnement du frein arrière (235), pour actionner ledit organe d'actionnement du frein arrière (235), par réaction d'une gaine extérieure (222) dudit câble de frein intermédiaire (220) agissant sur ledit organe de relais de réaction (310) lors de l'application de ladite pédale d'actionnement du frein synchrone (205).
